# EUROPÄISCHE PATENTSCHRIFT

(11) **EP 2 064 454 B1**
(45) Veröffentlichungstag und Bekanntmachung des Hinweises auf die Patenterteilung: **24.04.2013**
(21) Anmeldenummer: 07802141.7
(22) Anmeldetag: 05.09.2007
(51) Int. Cl.: F16B 37/04, F16B 21/04

(54) **BEFESTIGUNGSEINRICHTUNG**
FASTENING DEVICE
DISPOSITIF DE FIXATION

(30) Priorität: 20.09.2006 DE 102006044074
(43) Veröffentlichungstag der Anmeldung: 03.06.2009
(73) Patentinhaber: Bayerische Motoren Werke Aktiengesellschaft, 80809 München (DE); ITW Automotive Products GmbH & Co. KG, 97993 Creglingen (DE)
(72) Erfinder: ZÖLLER, Angela, 81479 München (DE); ECKSTEIN, Frank, 97232 Giebelstadt (DE); SBONGK, Albert, 97996 Niederstetten (DE)
(86) Internationale Anmeldenummer: PCT/EP2007/007734
(87) Internationale Veröffentlichungsnummer: WO 2008/034521

(56) Entgegenhaltungen:
- EP-A- 1 270 962
- DE-A1- 2 626 046
- DE-A1- 3 513 641
- DE-A1- 3 624 395

## Beschreibung

Die Erfindung betrifft eine Befestigungseinrichtung mit den im Oberbegriff des Patentanspruches 1 angegebenen Merkmalen.

Eine derartige Befestigungseinrichtung ist aus der DE 26 26 046 bekannt.

Eine Befestigungseinrichtung sieht in der DE 40 00 517 A1 ein Befestigungselement mit einem Schaft vor, der Abflachungen aufweist, die nach dem Durchstecken eines Steckbereiches des Befestigungselements durch eine Durchtrittsöffnung in einem Wandbereich bis zum Anliegen einer Anlagefläche des Befestigungselements an dem Wandbereich mit entsprechenden Gegenflächen in der Durchtrittsöffnung zusammen wirken und dadurch ein Verdrehen des Befestigungselements in der Durchtrittsöffnung verhindern. Eine axiale Verlagerung des Befestigungselements aus der Durchtrittsöffnung ist durch radial elastische Federnasen an dem Schaft des Befestigungselements verhindert, die nach dem Einstecken des Befestigungselements in die Durchtrittsöffnung einen Randbereich der Befestigungsöffnung hintergreifen. Ein Entfernen des Befestigungselements ist somit nur mit einem Spezialwerkzeug möglich, das die Federnasen radial zusammen drückt und zumindest bereichsweise in die Durchtrittsöffnung einzustecken oder eventuell mit hindurch zu stecken ist. Das Einstecken des Befestigungselements in die Durchtrittsöffnung ist erschwert, da dabei die Federnasen mit dem Rand der Einstecköffnung zusammen wirkend durch eine an dem Befestigungselement zu bewirkende Axialkraft radial elastisch zusammen zu drücken sind. Die Federnasen können auf Grund ihrer Elastizität nur geringe axiale Kräfte aufnehmen und bei größeren Kräften eine Verlagerung des Befestigungselements aus der Durchtrittsöffnung nicht verhindern. Das Befestigungselement weist eine axiale Durchgangsöffnung auf, die einen Feuchtigkeitsübergang von einer Seite auf die andere Seite des Wandbereiches ermöglicht.

Der Erfindung liegt die Aufgabe zu Grunde, eine Befestigungseinrichtung mit den Merkmalen im Oberbegriff des Patentanspruches 1 anzugeben, die auch bei größeren an dem Befestigungselement wirkenden axialen Kräften das Befestigungselement zuverlässig in der Durchtrittsöffnung festhält, mit geringen Kräften montierbar und demontierbar ist und einen Feuchtigkeitsübergang von einer Seite auf die andere Seite des Wandbereiches vollständig oder zumindest weitgehend verhindern kann.

Diese Aufgabe ist durch die Merkmale im Patentanspruch 1 gelöst. Vorteilhafte Ausgestaltungen der Erfindung sind den Unteransprüchen entnehmbar.

Die Befestigungseinrichtung ist somit über seinen Schaft radial in der Durchtrittsöffnung zentriert und über seine Anlagefläche und den wenigstens einen radialen Vorsprung des durch die Durchtrittsöffnung hindurch gesteckten und in die Einbaulage gedrehten Steckbereiches gegenüber radialen Kräften und Belastungen in beiden axialen Richtungen formschlüssig in der Durchtrittsöffnung fixiert. Beispielsweise unter Verwendung wenigstens einer Befestigungseinrichtung, im Folgenden auch Befestigungselement genannt, kann deshalb ein Bauteil mit dem Wandbereich verbunden werden, an dem auch größere zur Mittelachse des Schaftes radiale und/oder axiale Belastungen wirken können. Ein Feuchtigkeitsübertritt von einer Seite auf die andere Seite des Wandbereiches kann durch eine Sackbohrung in dem Befestigungselement, in die zur Befestigung des Bauteiles an dem Wandbereich beispielsweise eine Gewindeschraube einschraubbar ist, weitgehend oder vollständig verhindert sein. Ein zuverlässiger, vollständiger Feuchtigkeitsübertritt kann zumindest bei einer zusätzlichen Verwendung beispielsweise wenigstens einer Scheibendichtung oder einer Bauteildichtung verhindert werden, die zwischen einer zugeordneten Seite des Wandbereiches und dem Befestigungselement und/oder dem Bauteil bzw. einem Zwischenteil angeordnet ist.

Ein Ausführungsbeispiel der Erfindung wird nachfolgend anhand einer Zeichnung näher erläutert. Es zeigen
- Fig. 1: eine vereinfachte Ansicht auf die mit gerundeten Eckbereichen etwa quadratische Durchtrittsöffnung in einem Wandbereich und das in seiner Stecklage befindliche Befestigungselement,
- Fig. 2: eine Fig. 1 entsprechende Ansicht aus einer perspektivischen Sicht,
- Fig. 3: eine Fig. 1 entsprechende Ansicht, in der das mit seinem Steckbereich durch die Durchtrittsöffnung gesteckte Befestigungselement in seine von einem Anschlag begrenzte Einbaulage gedreht ist,
- Fig. 4: eine Fig. 2 entsprechende Ansicht bei in die Einbaulage gedrehtem Befestigungselement,
- Fig. 5: eine Ansicht von dem Befestigungselement,
- Fig. 6: eine Seitenansicht von dem Befestigungselement,
- Fig. 7: eine Draufsicht auf die nach der Montage des Befestigungselements zwischen der Anlagefläche des Befestigungselements und dem Wandbereich angeordnete Scheibendichtung und
- Fig. 8: eine axiale Draufsicht auf das Befestigungselement.

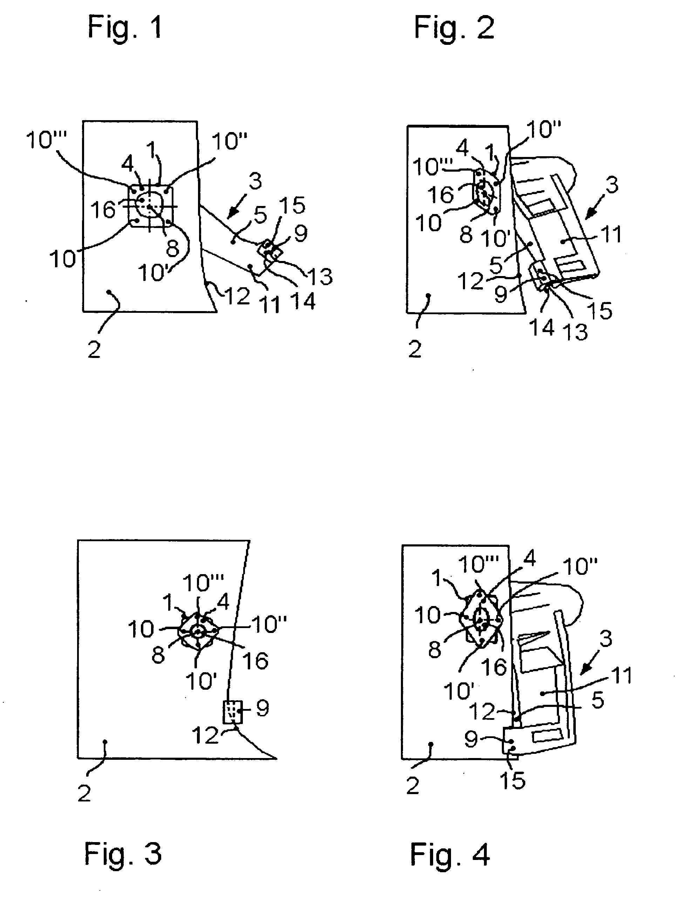

In Fig. 1 ist eine vereinfachte Ansicht auf die mit gerundeten Eckbereichen etwa im Querschnitt quadratisch gefertigte Durchtrittsöffnung 1 in einem Wandbereich 2 im Heckbereich eines Kraftfahrzeugs dargestellt.

Fig. 2 stellt eine Fig. 1 entsprechende Ansicht aus einer perspektivischen Sicht dar.

Der in den Figuren 1 bis 4 erkennbare Wandbereich 2 ist etwa vertikal in Fahrzeugquerrichtung angeordnet, an dem mit Hilfe eines Befestigungselements 3 eine nicht dargestellte Heckleuchte ohne einen Heckleuchtentopf von einem hinter dem Fahrzeug stehenden und dort verbleibenden Werker befestigt werden kann.

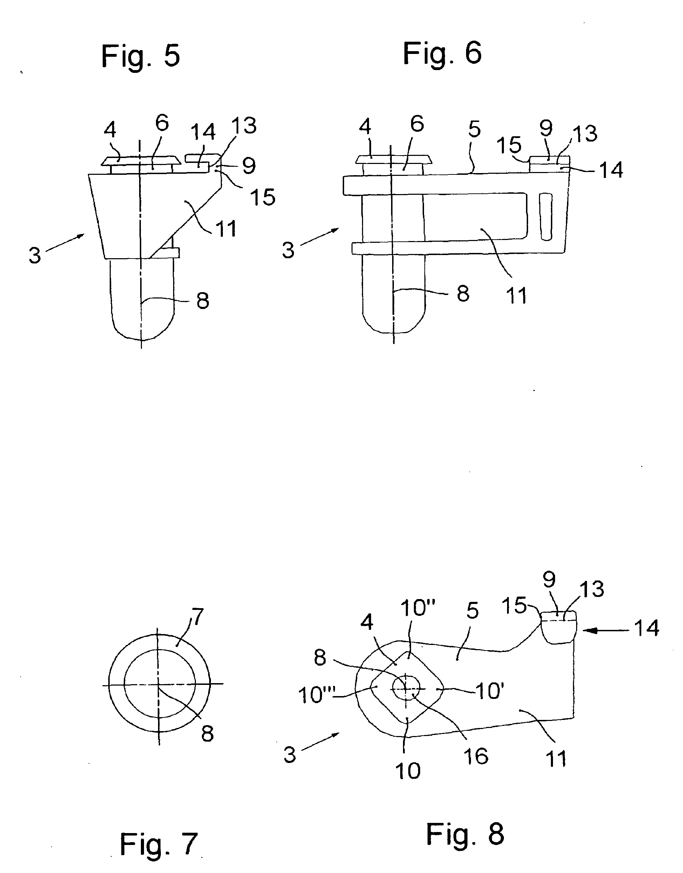

Hierzu ist das in den Figuren 5, 6 und 8 in verschiedenen Ansichten jeweils separat dargestellte Befestigungselement 3 verwendet, das einen Steckbereich 4 und in einem Abstand davon eine Anlagefläche 5 und zwischen dem Steckbereich 4 und der Anlagefläche 5 einen Schaft 6 aufweist.

In der in den Figuren 1 und 2 dargestellten Stecklage des Befestigungselements 3 kann der Steckbereich 4 des Befestigungselements 3, der an die etwa quadratische Querschnittsform der Durchtrittsöffnung 1 angepasst ist und ebenfalls Eckrundungen aufweist, axial durch die Durchtrittsöffnung 1 hindurch gesteckt werden, bis die Anlagefläche 5 des Befestigungselements 3 bzw. eine auf dem Schaft 6 des Befestigungselements 3 angeordnete elastische Scheibendichtung 7 an einer die Durchtrittsöffnung 1 umgebenden Randfläche des Wandbereiches 2 zur Anlage kommt und von der Anlagefläche 5 gegen den Wandbereich 2 gedrückt wird, wodurch die Scheibendichtung 7 zumindest etwas elastisch komprimiert wird. Der Querschnitt des Schaftes 6 ist derart an den Querschnitt der Durchtrittsöffnung 1 angepasst, dass dann der Schaft 6 in der Durchtrittsöffnung 1 radial zentriert ist.

Das Befestigungselement 3 kann anschließend in seine jeweils in den Figuren 3 und 4 dargestellte Einbaulage gebracht werden. Hierzu ist nach dem Durchstecken des Steckbereiches 4 des Befestigungselements 3 durch die Durchtrittsöffnung 1 das Befestigungselement 3 um die Achse 8 des Schaftes 6 in eine von einem Anschlag 9 begrenzte Einbaulage zu drehen, in der die durch die Eckbereiche des Steckbereiches 4 gebildeten radialen Vorsprünge 10, 10', 10", 10"' jeweils einen Randbereich der etwa quadratischen Durchtrittsöffnung 1 hintergreifen und dadurch eine axiale Verlagerung des Schaftes 6 aus der Durchtrittsöffnung 1 verhindern, wodurch das Befestigungselement 3 in der den Figuren 3 und 4 entsprechenden Einbaulage festgehalten ist.

Der Anschlag 9 ist in einem radialen Abstand von der Mittelachse 8 des Schaftes 6 an einem Hebelarm 11 des Befestigungselements 3 ausgebildet. Der Anschlag 9 ist durch die in der Einbaulage mit einem Randflächenbereich 12 des Wandbereiches 2 zusammen wirkende Bodenfläche 13 eines Schlitzes 14 in einem Vorsprung 15 des Hebelarmes 11 gebildet. Der Schlitz 14 weist wenigstens eine der Dicke des Randflächenbereiches 12 entsprechende Breite auf. Das Befestigungselement 3 ist aus einem Kunststoff gefertigt. Das Befestigungselement 3 weist eine zur Mittelachse 8 des Schaftes 6 koaxiale Sackbohrung 16 auf, die an der Stirnseite des Steckbereiches 4 offen ist. In die Sackbohrung 16 ist eine nicht dargestellte Gewindeschraube einschraubbar, mit der die zuvor angegebene, ebenfalls nicht dargestellte Heckleuchte ohne einen Heckleuchtentopf gegen den Wandbereich 2 belastet ist.

Entweder die Sackbohrung 16 weist ein dem Außengewinde der nicht dargestellten Gewindeschraube angepasstes Innengewinde auf oder die Gewindeschraube schneidet beim Eindrehen in die Sackbohrung 16 ein dem Außengewinde der Gewindeschraube entsprechendes Innengewinde in die Sackbohrung 16. Koaxial zur Achse 8 des Schaftes 6 ist auf dem Schaft 6 die in Fig. 7 dargestellte Scheibendichtung 7 angeordnet, die sich nach der Montage des Befestigungselements axial zwischen der Anlagefläche 5 des Befestigungselements 3 und einer Seite des Wandbereiches 2 befindet und dadurch die Durchtrittsöffnung 1 von einer Stirnseite her abdichtet.

Nach der Befestigung des Befestigungselements 3 und danach der nicht dargestellten Heckleuchte ohne einen Heckleuchtentopf an dem Wandbereich über wenigstens eine in das montierte Befestigungselement 3 eingeschraubte Gewindeschraube durchsetzt die Gewindeschraube eine Befestigungsöffnung in der Heckleuchte sowie eine scheibenförmige Bauteildichtung, die sich axial zwischen der Heckleuchte und der zugewandten Stirnseite des Steckbereiches des Befestigungselements 3 und/oder der zugewandten Stirnseite des Wandbereiches 2 befindet. Die Bauteildichtung ist bei dem Ausführungsbeispiel identisch mit der in Fig. 7 dargestellten Scheibendichtung.

Die Durchtrittsöffnung im Wandbereich kann einen unrunden, regelmäßigen oder unregelmäßigen Querschnitt oder wenigstens eine von einem runden Querschnitt ausgehende radiale Erweiterung aufweisen. Der Steckbereich des Befestigungselements kann an den Querschnitt der Durchtrittsöffnung angepasst sein. Dies ist jedoch nicht zwingend erforderlich. Die Durchtrittsöffnung und der Steckbereich des Befestigungselements können einen eventuell mit Eckrundungen und/oder Randrundungen versehenen, unabhängig voneinander beliebigen, beispielsweise von dem viereckigen Querschnitt des Ausführungsbeispiels abweichenden Querschnitt aufweisen. Es ist nicht erforderlich, dass der Schaft wie bei dem Ausführungsbeispiel einen kreisförmigen Querschnitt aufweist. Das Befestigungselement kann aus einem beliebigen Kunststoff oder aus einem anderen Werkstoff, beispielsweise aus Metall gefertigt sein. Mit der Befestigungseinrichtung kann eine vollständige Dichtheit an der Durchtrittsöffnung erreicht werden. In der Einbaulage kann das Befestigungselement sehr hohe Kräfte aufnehmen, die höher oder gleich sein können, als die für eine Zerstörung des Wandbereiches erforderlichen Kräfte. An dem Befestigungselement kann auch ein sehr hohes Drehmoment wirken, das den Anschlag gegen einen Randflächenbereich des Wandbereiches belastet. Eine Montage des Befestigungselements und des Bauteiles kann ohne Hilfsmittel von einer Seite, beispielsweise wenn der Wandbereich eine Heckwand eines Kraftfahrzeugs ist, von der Rückseite des Kraftfahrzeugs erfolgen. Das Befestigungselement ist zumindest in einer Drehrichtung extrem verdrehsicher angeordnet. Durch eine einfache Maßnahme, die ein Entfernen des Anschlages von dem Wandflächenbereich verhindert, kann eine sichere Verdrehsicherung in beide Drehrichtungen um die Achse des Schaftes des Befestigungselements erreicht werden. Das Befestigungselement ist vor der Montage des Bauteiles verliersicher an dem Wandbereich anzubringen, so dass der beispielsweise transportable Wandbereich, beispielsweise an der Rohkarosserie eines Kraftfahrzeugs an unterschiedliche Orte zu transportieren ist. Eine zuverlässige Abdichtung der Durchtrittsöffnung beispielsweise über eine Dichtung erfordert lediglich einen geringen Bauraum für die Dichtung. Ein Anschlagteller oder dergleichen ist nicht erforderlich. Das Befestigungselement ist formschlüssig in der Durchtrittsöffnung festgehalten. Der Anschlag ist unterschiedlich zu gestalten und kann an die konstruktiven Voraussetzungen angepasst werden. Der Anschlag kann auch beispielsweise durch einen Bolzen oder Vorsprung gebildet sein. Bei einem Austausch oder Ausbau und/oder Einbau des Bauteiles kann das Befestigungselement in seiner Einbaulage verbleiben. Die Querschnittsform der Durchtrittsöffnung ist an sich beliebig. Die Länge der Sackbohrung und die Wandstärke des Befestigungselements sowie eine in die Sackbohrung einschraubbare Gewindeschraube können an die zu erwartende Belastung angepasst sein.

## Patentansprüche

1. Befestigungseinrichtung (3), die einen Steckbereich (4) und in einem Abstand davon eine Anlagefläche (5) und zwischen dem Steckbereich (4) und der Anlagefläche (5) einen Schaft (6) aufweist, wobei der Steckbereich (4) in einer Stecklage der Befestigungseinrichtung (3) axial durch eine Durchtrittsöffnung (1) in einem Wandbereich (2) hindurch steckbar ist, bis die Anlagefläche (5) oder ein dazwischen angeordnetes Zwischenteil (7) von einer Seite an dem Wandbereich (2) anliegt und der Schaft (6) in der Durchtrittsöffnung (1) radial zentriert ist, und die Befestigungseinrichtung (3) mit einem Bauteil verbindbar ist, wobei sich die Befestigungseinrichtung (3) in ihrer Einbaulage befindet, wenn der Steckbereich (4) der Befestigungseinrichtung (3) in der Stecklage durch die Durchtrittsöffnung (1) hindurch gesteckt und danach um die Achse (8) des Schaftes (6) in eine Einbaulage gedreht ist, in der wenigstens ein radialer Vorsprung (10, 10', 10", 10"') des Steckbereiches (4) einen Randbereich der Durchtrittsöffnung (1) hintergreift und dadurch eine axiale Verlagerung des Schaftes (6) aus der Durchtrittsöffnung (1) verhindert, wodurch die Befestigungseinrichtung (3) in der Einbaulage festgehalten Ist, wobei die Einbaulage von einem Anschlag (9) begrenzt ist, der in einem radialen Abstand von der Mittelachse (B) des Schaftes (6) an einem Hebelarm (11) der Befestigungseinrichtung (3) ausgebildet ist, **dadurch gekennzeichnet, dass** der Anschlag (9) durch die in der Einbaulage mit einem Randfläflenbereich (12) des Wandbereiches (2) zusammen wirkende Bodenfläche (13) eines Schlitzes (14) in einem Vorsprung (15) des Hebelarmes (11) gebildet ist und der Schlitz (14) wenigstens eine der Dicke des Randflächenbareiches (12) entsprechende Breite aufweist.

2. Befestigungseinrichtung nach Patentanspruch 1, **dadurch gekennzeichnet, dass** die Befestigungseinrichtung (3) aus einem Kunststoff gefertigt ist.

3. Befestigungseinrichtung nach einem der Patentansprüche 1 oder 2, **dadurch gekennzeichnet, dass** die Befestigungseinrichtung (3) eine zur Mittelachse (8) des Schaftes (6) koaxiale Sackbohrung (16) aufweist, die an der Stirnseite des Steckbereiches (4) offen ist und in die eine Gewindchraube einschraubbar ist, mit der das Bauteil gegen den Wandbereich (2) belastbar ist.

4. Befestigungseinrichtung nach Patentanspruch 3, **dadurch gekennzeichnet, dass** entweder die Sackbohrung (16) ein dem Außengewinde der Gewindeschraube angepasstes Innengewinde aufweist oder derart ist, dass die Gewindeschraube beim Eindrehen in die Sackbohrung ein dem Außengewinde der Gewindeschraube entsprechendes Innengewinde in die Sackbohrung schneidet.

5. Befestigungseinrichtung nach einem der Patentansprüche 1 bis 4, **dadurch gekennzeichnet, dass** auf dem Schaft (6) eine Scheibendichtung (7) angeordnet ist, die sich nach der Montage der Befestigungseinrichtung (3) axial zwischen der Anlagefläche (5) der Befestigungseinrichtung (3) und einer Seite des Wandbereiches (2) befindet und dadurch die Durchtrittsöffnung (1) von einer Stirnseite her abdichtet.

6. Befestigungseinrichtung nach einem der Patentansprüche 3 oder 4, **dadurch gekennzeichnet, dass** sie derart an das Bauteil und den wandbereich angepasst ist, dass nach der Befestigung der Befestigungseinrichtung (3) und des Bauteiles die Gewindeschraube eine Befestigungsöffnung in dem Bauteil und eine scheibenförmige Bauteildichtung durchsetzt, die sich axial zwischen dem Bauteil und der zugewandten Stirnseite des Steckbereiches (4) der Befestigungseinrichtung (3) und/oder der zugewandten Stirnseite des Wandbereiches (2) befindet

7. Befestigungseinrichtung nach einem der Patentansprüche 1 bis 6, **dadurch gekennzeichnet, dass** der Steckbereich in eine Durchtrittsöffnung hindurchsteckbar ist, die einen unrunden, regelmäßigen oder unregelmäßigen Querschnitt oder wenigstens eine von einem runden Querschnitt ausgehende radiale Erweiterung aufweist, oder zusätzlich der Steckbereich (4) der Befestigungseinrichtung (3) an den Querschnitt der Durchtrittsöffnung (1) angepasst ist.

8. Befestigungseinrichtung nach Patentanspruch 7, **dadurch gekennzeichnet, dass** die Durchtrittsöffnung (1) und der Steckbereich (4) der Befestigungseinrichtung (3) einen eventuell mit Eckrundungen und/oder Randrundungen versehenen viereckigen Querschnitt aufweisen.

## Claims

1. A fastening device (3) comprising a plug-in region (4), a contact surface (5) at a distance therefrom and a shank (6) between the region (4) and the surface (5), wherein when the fastening device (3) is in a position for plugging in, the region (4) is insertable axially through an opening (1) in a wall region (2) until the contact surface (5) or an intermediate part (7) abuts one side of the wall region (2) and the shank (6) is radially centred in the opening (1), and the fastening device (3) is connectable to a component, wherein the fastening device (3) is in the installed position when the plug-in region (4) of the fastening device (3) is plugged into position through the opening (1) and is then rotated around the axis (8) of the shank (6) into an installed position in which at least one radial projection (10, 10', 10", 10"'), of the plug-in region (4) grips below a boundary region of the opening (1) and thus prevents axial displacement of the shank (6) out of the opening (1), with the result that the fastening device (3) is secured in the installed position, wherein the installed position is bounded by a stop (9) formed on a lever arm (11) of the fastening device (3) at a radial distance from the central axis (8) of the shank (6), **characterised in that** the stop (9) is formed by an end face (13) of a slot (14) in a projection (15) on the lever arm (11), the end face co-operating with a boundary surface region (12) of the wall region (2) when in the installed position, and the slot (14) has a width at least equal to the thickness of the boundary surface region (12).

2. A fastening device according to claim 1, **characterised in that** the fastening device (3) is made of a plastics material.

3. A fastening device according to claim 1 or claim 2, **characterised in that** the fastening device (3) has a blind bore (16) coaxial with the central axis (8) of the shank and open at the end face of the plug-in region (4), a screw being screwable into the bore and stressing the component against the wall region (2).

4. A fastening device according to claim 3, **characterised in that** either the blind bore (16) has an internal screwthread adapted to the outer thread of the screw or is such that the screwthread, when screwed into the blind bore, cuts an internal thread in the blind bore corresponding to the external thread of the screw.

5. A fastening device according to any of claims 1 to 4, **characterised in that** a sheet gasket (7) is disposed on the shank (6) and, after installation of the fastening device (3), is disposed axially between the contact surface (5) of the fastening device (3) and a side of the wall region (2) and thus seals the opening (1) at one end.

6. A fastening device according to claim 3 or claim 4, **characterised in that** it is so adapted to the component and the wall region that after the fastening device (3) and the component have been fastened, the screw extends through an opening in the component and through a disc-shaped component seal disposed axially between the component and the facing surface of the plug-in region (4) of the fastening device (3) and/or the facing surface of the wall region (2).

7. A fastening device according to any of claims 1 to 6, **characterised in that** the plug-in region is insertable into an opening which has a non-round, regular or irregular cross-section or at least has a radial extension starting from a round cross-section or additionally the plug-in region (4) of the fastening device (3) is adapted to the cross-section of the opening (1).

8. A fastening device according to claim 7, **characterised in that** the passage opening (1) and the plug-in region (4) of the fastening device (3) have a quadrilateral cross-section, optionally with rounded corners and/or rounded boundaries.

## Revendications

1. Dispositif de fixation (3) comportant une zone d'enfichage (4) et une surface d'appui (5) située à distance de cette zone ainsi qu'une tige (6) située entre la zone d'enfichage (4) et la surface d'appui (5), la zone d'enfichage (4) pouvant être enfichée, dans une position d'enfichage du dispositif de fixation (3), axialement au travers d'une ouverture de passage (1) dans une zone de paroi (2) jusqu'à ce que la surface d'appui (5) ou un élément intermédiaire intercalé (7) s'applique par une face contre la zone de paroi (2), et que la tige (6) soit centrée radialement dans l'ouverture de passage (1) et le dispositif de fixation (3) pouvant être relié à un élément, le dispositif de fixation (3) se trouvant dans sa position de montage lorsque sa zone d'enfichage (4) est enfichée dans la position d'enfichage au travers de l'ouverture de passage (1), puis étant ensuite déplacé par rotation autour de l'axe (8) de la tige (6) dans une position de montage dans laquelle au moins une saillie radiale (10, 10', 10", 10") de la zone d'enfichage (4) vient en prise à l'arrière d'une zone de bord de l'ouverture de passage (1) et empêche ainsi un déplacement de l'arbre (6) hors de l'ouverture de passage (1), le dispositif de fixation (3) étant ainsi maintenu dans la position de montage, cette position de montage étant limitée par une butée (9) qui est réalisée à distance radiale de l'axe médian (8) de la tige (6) sur un bras de levier (11) du dispositif de fixation (3),
**caractérisé en ce que**
la butée (9) est formée par la surface de fond (13) d'une rainure (14) réalisée dans une saillie (15) du bras de levier (11) coopérant avec une zone de surface de bord (12) de la zone de paroi (2) dans la position de montage et la rainure (14) a une largeur correspondant au moins à l'épaisseur de la zone de la surface de bord (12).

2. Dispositif de fixation conforme à la revendication 1,
**caractérisé en ce que**
le dispositif de fixation (3) est réalisé en un matériau synthétique.

3. Dispositif de fixation conforme à l'une des revendications 1 et 2,
**caractérisé en ce que**
le dispositif de fixation (3) comporte un trou borgne (16) coaxial à l'axe médian (8) de la tige (6) qui est ouvert sur la face frontale de la zone d'enfichage (4) et dans lequel peut être vissée une vis permettant de solliciter l'élément contre la zone de paroi (2).

4. Dispositif de fixation conforme à la revendication 3,
**caractérisé en ce que**
soit le perçage borgne (16) comporte un alésage interne correspondant au filetage externe de la vis ou est réalisé de sorte que la vis découpe dans le trou borgne, lors de sa rotation dans ce trou un alésage interne correspondant à son filetage externe.

5. Dispositif de fixation conforme à l'une des revendications 1 à 4,
**caractérisé en ce que**
sur la tige (6) est monté un disque d'étanchéité (7) qui est situé après le montage du dispositif de fixation (3), axialement entre la surface d'appui (5) du dispositif de fixation (3) et une face de la zone de paroi (2) et ainsi rend étanche l'ouverture de passage (1) sur une face frontale.

6. Dispositif de fixation conforme à l'une des revendications 3 et 4,
**caractérisé en ce qu'**
il est adapté à l'élément et à la zone de paroi de sorte que, après fixation du dispositif de fixation (3) et de l'élément la vis traverse une ouverture de fixation dans l'élément et un élément d'étanchéité en forme de disque situé axialement entre l'élément et la face frontale tournée vers celui-ci de la zone d'enfichage (4) du dispositif de fixation (3) et/ou de la face frontale tournée vers celui-ci de la zone de paroi (2).

7. Dispositif de fixation conforme à l'une des revendications 1 à 6,
**caractérisé en ce que**
la zone d'enfichage peut être enfichée au travers d'une ouverture de passage ayant une section non circulaire régulière ou irrégulière ou au moins une extension radiale à partir d'une section circulaire, ou en outre, la zone d'enfichage (4) du dispositif de fixation (3) est adaptée à la section de l'ouverture de passage (1).

8. Dispositif de fixation conforme à la revendication 7,
**caractérisé en ce que**
l'ouverture de passage (1) et la zone d'enfichage (4) du dispositif de fixation (3) ont une section rectangulaire ou carrée éventuellement équipée de coins arrondis et/ou de bords arrondis.
